Europäisches Patentamt

European Patent Office

Office européen des brevets

(19)

(11) EP 0 642 538 B1

(12) EUROPÄISCHE PATENTSCHRIFT

(45) Veröffentlichungstag und Bekanntmachung des Hinweises auf die Patenterteilung:
27.12.1996 Patentblatt 1996/52

(21) Anmeldenummer: 93911728.9

(22) Anmeldetag: 28.04.1993

(51) Int Cl.6: C08F 8/00, C08F 8/46,
C08F 297/00, C08F 287/00

(86) Internationale Anmeldenummer:
PCT/DE93/00373

(87) Internationale Veröffentlichungsnummer:
WO 93/24537 (09.12.1993 Gazette 1993/29)

(54) **VERFAHREN ZUR HERSTELLUNG VON CARBOXYLIERTEN STYREN-DIEN-BLOCK-COPOLYMEREN**

PROCESS FOR PRODUCING CARBOXYLATED STYRENE-DIENE BLOCK COPOLYMERS

PROCEDE DE PRODUCTION DE COPOLYMERES EN MASSE CARBOXYLES DE STYRENE-DIENE

(84) Benannte Vertragsstaaten:
AT BE CH DE ES FR GB IT LI NL SE

(30) Priorität: 27.05.1992 DE 4217469

(43) Veröffentlichungstag der Anmeldung:
15.03.1995 Patentblatt 1995/11

(73) Patentinhaber: Buna Sow Leuna Olefinverbund GmbH
06258 Schkopau (DE)

(72) Erfinder:
• GERECKE, Jochen
D-4090 Halle (DE)
• WULFF, Dirk
D-4090 Halle (DE)
• THIELE, Klaus
D-3200 Hildesheim (DE)
• HOFMANN, Tatjana
D-4090 Halle (DE)
• GRUBER, Klaus
D-4020 Halle (DE)
• NAGEL, Marion
D-4200 Merseburg (DE)
• HÄUSSLER, Lutz
D-4090 Halle (DE)

(56) Entgegenhaltungen:
EP-A- 0 173 380          GB-A- 2 039 497

• PATENT ABSTRACTS OF JAPAN vol. 14, no. 299 (C-733)(4242) 27. Juni 1990 & JP,A,02 097 510 (JAPAN SYNTHETIC RUBBER CO LTD) 10. April 1990
• PATENT ABSTRACTS OF JAPAN vol. 13, no. 49 (C-565)(3397) 3. Februar 1989 & JP,A,63 243 119 (JAPAN SYNTHETIC RUBBER CO LTD) 11. Oktober 1988

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von carboxylierten Blockcopolymeren auf Basis von Zusammensetzungen aus monovinylaromatischen Verbindungen, insbesondere Styren und Methylstyrenen, und konjugierten Dienen, insbesondere Butadien-(1,3). Isopren und 2,3-Dimethylbutadien-(1,3), mit verbesserten adhäsiven Eigenschaften durch radikalische Pfropfung von , ß-ethylenisch ungesättigten Mono- und Dicarbonsäuren bzw. ihren Anhydriden auf unhydrierte oder selektiv hydrierte Blockcopolymere unterschiedlicher Zusammensetzung und Struktur.

Bekanntlich können Vinylaryl-Dien-Blockcopolymere unterschiedlicher Zusammensetzung und Struktur mit einem in weiten Grenzen variierbaren Eigenschaftsniveau gezielt durch anionische Lösungspolymerisation mit nachfolgender Fällung des Blockcopolymerproduktes hergestellt werden (GB 1068.130, GB 1098.570, US 3.198.744, US 3.231.635, US 3.265.765, US 3.297.793, US 3.322.856, US 3.356.763, US 3.452.119, US 4.391.949, US 4.426.495, US 4.444.953).

Dabei ist zu berücksichtigen, daß Dreiblockcopolymere mit Polyvinylaryl-Endblöcken, insbesondere Polystyrensegmenten (S), und einem Polybutadien (B) - bzw. Polyisopren (I) - Mittelblock (SBS bzw. SIS) im unvernetzten Zustand zu Produkten mit den für übliche Elastomeranwendungen adäquaten physikalischen Eigenschaften verarbeitbar sind (GB 1.035.873). Demgegenüber müssen Blockcopolymere mit Butadien (B) - oder Isopren (I) - Endblöcken (SB oder SI und BSB oder ISI) vorher vernetzt werden.

Die Verwendung der Styren-Dien-Blockcopolymeren ist sehr vielseitig. Schon in geringer Konzentration führt ihr Einsatz zur Verbesserung wichtiger physikalischer Eigenschaften von Elastomeren (GB 953 750, GB 1.022.530, GB 1.033.113, GB 1.077.769, US 3.322.856, NL 69.07168).

Die Einmischung in Polystyren (PS)-Formmassen ergibt schlagzähe Einstellungen (GB 1.077.769, GB 1.105.585, GB 1.173.614, GB 1.053.596, BE 689.727, BE 700.336, BE 712.963, FR 1.483.215, US 3.906.058, US 3.907.931, DD 297.657).

Desgleichen werden durch Polymerisation von monomerem Styren in Gegenwart von Styren-Dien-Blockcopolymeren schlagzähe PS-Formmassen erhalten (GB 1.035.920, GB 1.045.421, GB 1.046.646, BE 703 380).

Auch Compounds auf Basis von Zusammensetzungen aus PS, 1,4-cis-Polybutadien (BR) und Styren-Butadien-Zweiblockcopolymerisat (SB) weisen auf Grund des SB-Zusatzes verbesserte mechanische Kennwerte auf (US 3.476.829, US 3.781.383, US 3.907.929).

Ebenso können Polyolefine durch Zumischung geeigneter Blockcopolymerisate schlagzäh ausgerüstet werden (BE 687.324, GB 1.035.849, GB 1.054.354, GB 1.154.917).

Obwohl die Styren-Dien-Blockcopolymere eine Vielzahl technischer Vorteile besitzen, ist ihre Verwendbarkeit auf Grund ihrer Empfindlichkeit gegenüber Oxidationsreaktionen eingeschränkt. Dieser auf den ungesättigten Charakter der polymerisierten Dieneinheiten zurückzuführende Nachteil kann durch selektive Hydrierung der Polydiensegmente (US 3.113.986, US 4.226.952) beseitigt werden.

Die hydrierten Blockcopolymere haben zumeist einen Restanteil an olefinischen Doppelbindungen von 0,5 bis 20 % bezogen auf den vor der Hydrierung vorhandenen Anteil. Sowohl die unhydrierten als auch die selektiv hydrierten Blockcopolymerisate sind für Anwendungen, die eine hohe Adhäsionsfähigkeit des Blockcopolymeren benötigen, nicht einsetzbar.

Vielfach erfordert die Verwendung von Blockcopolymeren als Verträglichkeitsvermittler in Formmassen aus unverträglichen Komponenten, wie Polymer-Blends und -Composites mit polaren Anteilen, bzw. als Adhesivs in verschiedenen Beschichtungen, Laminaten und dergleichen die Ausrüstung der Styren-Dien-Blockcopolymerisate mit funktionellen Gruppen.

Neben der sprunghaften Verbesserung der Zwischenphasenadhäsion besonders in Polymer-Blends, einschließlich einer deutlichen Schlagzähigkeitszunahme, wirkt sich eine Funktionalisierung der als Haupt- oder Zusatzkomponente verwendeten Blockcopolymeren auch auf die "äußere Adhäsion" gegenüber unterschiedlichen Materialien, wie z. B. Fasern, Füllstoffen, Metallen usw., günstig aus.

Vor allem selektiv hydrierte Styren-Dien-Dreiblockcopolymere, deren Mittelblöcke eine Ethylen-Butylen- oder Ethylen-Propylen-Struktur aufweisen (SEBS, SEPS), funktionalisiert durch Aufpropfen von $\alpha$, ß-ethylenisch ungesättigten Mono- und Dicarbonsäuren und insbesondere Maleinsäureanhydrid (MSA) sowie anderen Dicarbonsäureanhydriden, sind als Verträglichmacher bzw. Adhesivs bevorzugt.

Die Grundlage für die Funktionalisierung von Dienkautschuken bildet die als Maleinisierung von mastizierten statistischen Styren-Butadien-Copolymeren (SBR), stereospezifischen 1,4-Polybutadienen (BR) oder 1,4-Polyisoprenen (IR) bekannt gewordene Umsetzung mit 0,01 bis 2,5 Masse-% MSA, gegebenenfalls in Gegenwart von Peroxiden oder Diazoverbindungen bzw. anderen freie Radikale bildenden Verbindungen, im Schmelzezustand, vorzugsweise bei Temperaturen zwischen 200 und 250 °C (GB 1.119.629, JP 32707/70). Die auf diese Weise erhaltenen maleinisierten Kautschuke zeichnen sich durch eine Verbesserung der Festigkeitskennwerte des noch unvulkanisierten Kautschuks, der sogenannten "green strength", aus (GB 1.119.629).

SBS-Dreiblockcopolymere mit geringer 1,2-Konfiguration, d. h. niedrigem Gehalt an Vinylbutadiensegmenten, werden günstigerweise durch Pfropfung von Maleinsäure bzw. MSA unter Schmelzemischbedingungen in Abwesenheit eines radikalischen Initiators und in Gegenwart eines Radikalinhibitors, wie z. B. Phenol-, Phosphor- oder Aminverbindungen, die die unerwünschte Vernetzung bzw. Gelbildung unterdrücken, funktionalisiert (US 4.292.414).

Charakteristisch für diese Form einer Pfropfaddition, auch als "ENE"-Reaktion bezeichnet, ist ein Mindestanteil an ungesättigten Bindungen in den Diensegmenten. Das betrifft auch selektiv hydrierte Blockcopolymere mit hohem 1,2-Konfigurationsanteil, die einen ausreichenden Grad an Restungesättigtheit, im allgemeinen zwischen 0,5 und 20 % des vor der Hydrierung vorliegenden Grades, besitze müssen, um durch MSA oder ein anderes geeignetes funktionelles Monomer mittels "ENE"-Reaktion gepfropft zu werden (US 3.451.988, US 4.226.952).

Die Pfropfaddition führt bei Verwendung von MSA als Monomer zu angehängten Bernsteinsäureanhydridgruppen bevorzugt in Allylstellung, die thermisch äußerst instabil sind und relativ leicht wieder abgespalten werden ("Kontra-ENE"-Reaktion). Thermisch stabilere Pfropfprodukte, die außerdem verbesserte mechanische Kennwerte sowie eine höhere Transparenz und Fließfähigkeit besitzen, werden durch Aufpropfen von MSA auf Blockcopolymere mit hoher 1,2-Konfiguration und hohem Hydriergrad, wie besonders SEBS, erhalten (US 4.578.429). Unter den gewählten Schmelzemischbedingungen, vorzugsweise in einem Extruder unter Verwendung eines peroxidischen Initiators sowie von etwa 0,2 bis 5,0 % MSA, findet die Pfropfung überwiegend an den tertiären Kohlenstoffatomen der EB-Segmente statt. Unter Einhaltung bestimmter Monomer-/Initiatorkonzentrationsverhältnisse können im wesentlichen gelfreie Pfropfprodukte erhalten werden.

Prinzipiell kann die Funktionalisierung der unhydrierten sowie selektiv hydrierten Styren-Dien-Blockcopolymeren in Analogie zur Maleinisierung von IR (JP 20294/74) durch Pfropfung von Mono- und Dicarbonsäuren und deren Derivaten, insbesondere MSA, mit oder ohne einem radikalischen Initiator auch in einem organischen Lösungsmittel durchgeführt werden (US 4308353).

Dieses Verfahren weist erhebliche Nachteile auf. Vor allem auf Grund der durch die Lösung der Reaktanten einzuhaltenden Bedingungen werden insgesamt Pfropfprodukte mit einem unbefriedigenden Modifiziergrad , d. h., einer im wesentlichen auf die Endgruppen von ungesättigten Blockcopolymeren mit massenmittleren Molekulargewichten $(M_W)$ im unteren interessierenden $M_W$-Bereich begrenzten Funktionalisierung, erhalten.

Darüber hinaus ist die Lösungspfropfung äußerst unwirtschaftlich. Das Arbeiten mit großen Mengen an Lösungsmittel über den gesamten Prozeß, von der Lösung der Einsatzstoffe bis zur Rückgewinnung und Wiederrückführung, einschließlich der Berücksichtigung der physiologischen Unbedenklichkeit sowie der brandschutztechnischen Erfordernisse beim Umgang mit den in Frage kommenden organischen Lösungsmitteln, erfordert hohe zusätzliche Kosten, die eine kommerzielle Nutzung der Lösungspfropfung praktisch verbieten.

Allein die Schmelzepfropfung, insbesondere auf Basis von selektiv hydrierten Styren-Dien-Blockcopolymeren als Rückgratpolymere, wird technisch in größerem Umgang genutzt. Trotzdem sind mit dem Schmelzepfropfprozeß eine Reihe von Problemen verbunden. Das betrifft vor allem die auf die hohen Temperaturen, im allgemeinen zwischen 200 und 300°C, sowie Scherkräfte zurückzuführenden unerwünschten Reaktionen.

Trotz recht kurzer Reaktionszeiten sind unter den Schmelzebedingungen Vernetzungs- und Abbaureaktionen des Blockcopolymerrückgrats, insbesondere bei den ungesättigten Blockcopolymerisaten sowie bei höheren Monomer- und/oder Initiator-Konzentrationen zwecks Erreichung höherer Funktionalisierungsgrade, in größerem Umfang nicht auszuschließen.

Damit ist die Variationsmöglichkeit hinsichtlich der gezielten "Einstellbarkeit" der wichtigsten Pfropfprodukteigenschaften, vor allem des Funktionalisierungsgrades (Konzentration an Carboxyl- und anderen funktionellen Gruppen), des Schmelzindex und der physikalisch-mechanischen Eigenschaften, gering.

Da die Schmelzepfropfung innerhalb kurzer Reaktionszeiträume von im allgemeinen wenigen Minuten unter extremen Bedingungen (hohe Temperatur und hohe Scherkräfte im Extruder) abläuft, beschränken sich die möglichen Schmelzepfropfsysteme in der Praxis auf solche Reaktanten, die einmal diesen Bedingungen chemisch standhalten und zum anderen keine oder nur eine sehr geringe korrodierende Wirkung gegenüber dem Werkzeugmaterial besitzen. Deshalb bleibt die technisch nutzbare Schmelzepfropfung auf gesättigte (selektiv hydrierte) Blockcopolymere, insbesondere SEBS und SEPS, und bei den Monomeren auf MSA bzw. Anhydride höherer α, β-ethylenisch ungesättigter Dicarbonsäuren, die sich - ohne sofortiges Entweichen aus der Schmelze - im Reaktionsmedium verteilen und nicht schlagartig polymerisieren, beschränkt.

Auch trotz Beschränkung auf diese sehr geringe Anzahl praktisch nutzbarer Reaktanten sind die obengenannten Nachteile der Schmelzepfropfung, wie nicht zu verhindernder Abbau des Blockcopolymerrückgrats und Erreichung von nur geringen Funktionalisierungsgraden, nicht beseitigt. In der homogenen Schmelze werden unter den Reaktionsschmelzebedingungen im Extruder die Monomeren mit dem gesamten Rückgratblockcopolymerisat im molekularen Zustand gut vermischt und somit die funktionellen Gruppen zwar recht gleichmäßig an die Rückgratketten "angehängt", aber die für die Beurteilung der Pfropfung wichtigen Größen wie Pfropfausbeute (< 80%, im allgemeinen < 50 %) und Pfropfungsgrad (< 2 %, im allgemeinen < 1 %) sind gering und die für die Adhäsionsfestigkeit bestimmende Konzentrationsverteilung der gepfropften funktionellen Gruppen nicht optimal.

Die Erfindung hat das Ziel, funktionalisierte Styren-Dien-Blockcopolymere mit einem gezielt einstellbaren Gehalt an freien und/oder latenten Carboxylgruppen durch Pfropfung entsprechender Monomerer auf unhydrierte und/oder selektiv hydrierte Styren-Dien-Blockcopolymerisate als Rückgrat herzustellen, die als Adhesivs und Verträglichkeitsvermittler bzw. Schlagzähmodifikatoren in Polymer-Blends, Polymer-Composites sowie anderen Polymerwerkstoffen und -anwendungen geeignet sind und bei deren Herstellung die obengenannten Nachteile der Funktionalisierung (Carboxylierung, Maleinisierung) im Schmelzezustand oder in organischer Lösung nicht auftreten.

Der Erfindung liegt die Aufgabe zugrunde, ein Verfahren zur Herstellung von carboxylierten Styren-Dien-Blockcopolymeren durch radikalische Pfropfung einer $\alpha$, $\beta$-ethylenisch ungesättigten Mono- und/oder Dicarbonsäure bzw. ihres Anhydrids (Carboxylmonomer) auf unhydrierte und/oder selektiv hydrierte Styren-Dien-Blockcopolymere auf Basis von Zusammensetzungen 10 bis 90 Masse-% Styren - /90 bis 10 Masse-% (gegebenenfalls selektiv hydrierte) Dieneinheiten mit massenmittleren Molekulargewichten zwischen 20 000 und 300 000, vorzugsweise zwischen 50 000 und 250 000, unter Sicherung von Pfropfausbeuten zwischen 50 und 99 %, vorzugsweise zwischen 80 und 95 %, über einen Gelgehaltsbereich für das carboxylierte Blockcopolymerisat von 0 bis 95 Masse-%, zu entwickeln.

Erfindungsgemäß wird die Aufgabe dadurch gelöst, daß bei Polymerisationstemperaturen zwischen 40 und 100°C, vorzugsweise zwischen 50 und 90°C, Zusammensetzungen aus 0,2 bis 10 Massenteilen Carboxylmonomer und 0 bis 10 Massenteilen carboxylgruppen- und säureanhydridgruppenfreies Comonomer oder Comonomergemisch, bezogen auf 100 Massenteile Blockcopolymer-Rückgrat, in trockener pulveriger und/oder krümeliger und/oder schuppen- und/oder blättchen- und/oder granulatförmiger Reaktionsphase bis zur Erreichung einer auf die Blockcopolymer-Rückgratmasse bezogenen Konzentration zwischen 0,1 und 10 %, vorzugsweise zwischen 0,5 und 5 %, polymerisiertes Carboxylmonomer gepfropft werden.

Charakteristisches Merkmal dieser Art der Festphasenpfropfung ist die Aufrechterhaltung eines trockenen, fließfähigen Reaktionsmediums, das eine unterschiedliche Konsistenz von feinpulverig über blättchen-, schuppenförmig bis zu grobkörnig (granular) sein kann (Kurzbezeichnung: Festphasenpfropfung in pulveriger/körniger Phase).

Als technologisch sowie hinsichtlich günstiger Funktionalisierungsgrade und optimaler Pfropfprodukteigenschaften besonders vorteilhaft hat sich die Verwendung von 0,2 bis 10 Massenteile Acrylsäure oder 0,2 bis 5 Massenteile MSA, jeweils bezogen auf 100 Massenteile Blockcopolymer-Rückgrat, sowie von Pfropfmonomerzusammensetzungen aus entsprechenden Anteilen Carboxylmonomer und einem carboxylgruppen- und anhydridgruppenfreien Comonomer oder Comonomergemisch mit Massenverhältnissen von 1 zu 0,2 bis 5 erwiesen.

Als besonders geeignete Comonomere können Styren, $C_4$- bis $C_{16}$-Olefine bzw. -Diene und $C_1$- bis $C_8$-Ester der Acrylsäure bzw. Methacrylsäure eingesetzt werden.

Als Initiatoren sind die bekannten organischen peroxidischen und/oder diazogruppenhaltigen Verbindungen mit einer Zehnstunden-Halbwertstemperatur (10h-HWT, gemessen in 1,0-m Benzenlösung) zwischen 40 und 80°C, insbesondere Peroxidicarbonate, Perneodecanoate und Diacylperoxide, geeignet.

Als Rückgratpolymer für die erfindungsgemäße Festphasenpfropfung von Carboxylmonomeren bzw. carboxylmonomerhaltigen Monomermischungen sind unterschiedlich zusammengesetzte Blockcopolymere auf Basis von Zusammensetzungen aus Monovinylaromaten, insbesondere Styren und Methylstyrenen, und konjugierten Dienen, insbesondere Butadien-(1,3), 2-Methyl-butadien-(1,3) (Isopren) und 2,3-Dimethyl-butadien(1,3), mit verschiedener Struktur, wie symmetrische oder unsymmetrische lineare und sternförmig verzweigte (radiale) Blockcopolymere, einsetzbar (GB 985 614, DE 2 125 344).

Im allgemeinen kann jeder Polyvinylarylblock S das gleiche oder ein unterschiedliches massenmittleres Molekulargewicht $M_W$ von 4 000 bis 100 000 und jeder Polydienblock B das gleiche oder ein unterschiedliches $M_W$ von 10 000 bis 200 000 besitzen.

Unsymmetrische Blockcopolymere mit einem hohen Anteil an Styreneinheiten (50 - 80 Masse-%) und einem entsprechend geringen Anteil an Butadien- bzw. Isopreneinheiten (50 - 20 Masse-%), entweder mit linearer oder - durch Kopplung von Styren-Dien-Zweiblockcopolymeren mit S-Blöcken unterschiedlicher Blocklänge erhalten - radialer Struktur (DE 1959 922, US 3281 383), eignen sich gut für die erfindungsgemäße Funktionalisierung.

Dabei spielt es keine Rolle, ob die Blockcopolymeren ausschließlich scharfe Übergänge zwischen den Segmenten aufweisen oder auch "verschmierte", im wesentlichen statistische Copolymersegmente (tapered section) enthalten (DE 2550 226, DE 2550 227, GB 888.624, GB 1.044 862, NL 67 133 83).

Die verwendbaren Blockcopolymere können mittels bekannter Hydriermethoden (GB 1 030 306, US 3 700 633) selektiv hydriert worden sein, wobei besonders die mit einem hohen Sättigungsgrad der olefinischen Doppelbindungen (> 95 %), d. h. Blockcopolymere mit im wesentlichen Ethylen-Butylen-(EB) bzw. Ethylen-Propylen-Kautschukblöcken (EP), größeres Interesse für den erfindungsgemäßen Einsatz zur Herstellung von thermostabilen Pfropfprodukten besitzen.

Die Rückgrat-Blockcopolymere können, unabhängig von ihrem Sättigungsgrad, d. h. dem Anteil an ursprünglich vorhandenen ungesättigten Bindungen in den konjugierten Dienpolymerblöcken, ihrer Struktur, Zusammensetzung und mittleren Molmasse, direkt in der für sie üblichen Handelsform, entweder als Granulat oder als Pulver, Krümel, Blättchen, Schuppen und dergleichen, eingesetzt werden.

Die mit hoher Pfropfausbeute, d. h. mit einem Anteil von mindestens 80 % gepfropftes Carboxylmonomer (Acryl- oder Methacrylsäure, MSA), bezogen auf die gesamte polymerisierte Carboxylmonomermasse, erhaltenen Pfropfprodukte zeichnen sich durch günstige Pfropfungsgrade, d. h. von vorzugsweise 0,5 bis 5,0 und im besonderen von 1,0 bis 3,0 % gepfropftes Carboxylmonomer, bezogen auf die vorgelegte Blockcopolymermasse, aus. Dieser Bereich für den Pfropfungsgrad sichert einmal einen ausreichenden Zuwachs an Adhäsionsfestigkeit und erreicht andererseits noch nicht die Grenze des Abfalls der elastischen Eigenschaften.

Diese Erscheinung war nicht vorauszusehen, da analoge Schmelzepfropfprodukte entweder deutlich niedrigere Pfropfungsgrade aufweisen und damit geringere Adhäsionseigenschaften besitzen oder, wenn trotz schwierig zu handhabender Prozeßführung doch bis auf vergleichbare Pfropfungsgrade >1% polymerisiert worden ist, sie ihre Kautschukelastizität eingebüßt haben bzw. diese zumindest sehr stark eingeschränkt ist.

Dieser überraschende Vorteil der erfindungsgemäßen funktionalisierten Blockcopolymeren resultiert aus den Besonderheiten der in heterogener fester Phase ablaufenden Pfropfung, die dadurch charakterisiert ist, daß die Carboxylierung nur an ausgewählten, die Oberflächeneigenschaften bestimmenden, morphologischen Einheiten des Blockcopolymeren stattfindet, die für die Haftfestigkeit gegenüber anderen Komponenten bestimmend sind. Auf Grund einer solchen ungleichmäßigen Carboxylgruppenverteilung wird insgesamt eine höhere Adhäsionswirkung erreicht. Im Vergleich dazu wird bei der Funktionalisierung in homogener Phase (in Lösung oder in Schmelze) ein bedeutender Teil der funktionellen Gruppen für eine Haftverbesserung gegenüber anderen Komponenten nicht wirksam; wegen der in der Masse gleichmäßigen Verteilung wird praktisch ein Teil an Funktionalität verschenkt.

Des weiteren zeichnet sich das erfindungsgemäße Verfahren gegenüber den beiden bekannten Verfahren der Funktionalisierung der genannten Blockcopolymeren, insbesondere gegenüber der bislang favorisierten Schmelzepfropfung, durch eine hohe Variabilität hinsichtlich der Wahlmöglichkeit der Reaktionskomponenten und ihrer Konzentrationen aus, ohne Blockcopolymerabbau und die bei den Schmelzetemperaturen auftretenden Korrosionserscheinungen im Extruder befürchten zu müssen.

Das betrifft neben der Einsatzbreite an Blockcopolymeren auch die an verwendbaren Carboxylmonomeren, die unterschiedlich in ihrer Reaktivität, Funktionalität und Konsistenz - von der bei milden Reaktionsbedingungen flüssigen Acrylsäure mit einer freien Carboxlgruppe zum festen MSA mit einer in zwei Carboxylgruppen hydrolysierbaren Anhydridgruppe bis hin zu höhermolekularen Homologen - sein können, einschließlich unterschiedlicher Zusätze an unpolaren und/oder anhydridsowie carboxylgruppenfreien polaren Comonomerzusätzen innerhalb eines breiteren Konzentrationsbereiches. Unter Berücksichtigung dieser Variationsmöglichkeiten sowie der Wahl der Initiatorart und -konzentration können praktisch die gewünschte Carboxylgruppen-Funktionalität und der in weiten Grenzen wählbare Vernetzungsgrad (Gelgehalt) der funktionalisierten Blockcopolymeren eingestellt werden.

Durch das nachfolgende Ausführungsbeispiel soll das erfindungsgemäße Verfahren in seiner Variationsbreite dokumentiert werden.

Ausführungsbeispiel

Unter Verwendung der in Tabelle 1 aufgeführten RückgratBlockcopolymerisate (lfd. Nr. 1 bis 6), die hinsichtlich Zusammensetzung (PS/Kautschuk - Massenverhältnis), Hydriergrad (selektiv hydriert: Kautschuktypen EB, EP; unhydriert: Butadienkautschuk (B)) und Struktur (lineare Zwei- oder Dreiblock- sowie Sternblockcopolymere) und auch auf Grund ihrer stoffspezifischen bzw. physikalischen Eigenschaften ($M_W$ Schmelzindex MFI, Shore-Härte, spezifisches Gewicht ) sowie ihrer Einsatzform (Pulver, Krümel, Granulat) ein breites Blockcopolymer-Typensortiment überstreichen, sind die Pfropfreaktionen entsprechend den in Tabelle 2 angegebenen Polymerisationsbedingungen (Spalten 2 bis 6: Rezeptur; Spalten 7 und 8: Regime mit $T_{Pm}$ = Polymerisationstemperatur und $t_{pm}$ = Polymerisationszeit mit den Zahlenangaben für die Aufheizphase bis $T_{Pm}$/Polymerisationsphase bei konstanter $T_{Pm}$) in einem temperierbaren und mit einem wandgängigen Rührwerk ausgerüsteten sowie sauerstofffrei gespülten Reaktor durchgeführt worden. Es wurden eingesetzt als Monomere:

Acrylsäure (AS)
Maleinsäureanhydrid (MSA)
Styren (St)
Methylmethacrylat (MMA)
1,9-Decadien (Dec)

und als Initiatoren:

Diisopropylperoxidicarbonat (DIPP)
Dilauroylperoxid (DLPO) -Cumylperneodecanoat (CPND)
tert.-Butylperoxid (tBP)

Die als Reaktionskomponenten verwendeten Rückgrat-Blockcopolymerisate, Monomere und Initiatoren wurden bei Raumtemperatur miteinander vermischt (ca. 20-30 min), danach - entsprechend vorgegebenem Temperatur-Zeit-Programm - auf die Polymerisationsendtemperatur $T_{Pm}$ aufgeheizt und unter Konstanthaltung von $T_{Pm}$ bis zum Monomerendumsatz polymerisiert.

Danach wurde der Reaktor abgekühlt, mehrere Male mit Stickstoff gespült und bei Raumtemperatur entleert. Von dem erhaltenen Reaktionsprodukt sind nachfolgende Kennwerte (s. Tab. 3, Spalten 2 bis 6) ermittelt worden:

- Schmelzindex MFI (190°C/21,6 kg Auflagegewicht) nach DIN 53735;

- aufpolymerisierte Masse an Carboxylmonomer ($m_{carb}$), bestimmt durch Titration einer alkalisch eingestellten Produktprobe (2 g in 100 ml Xylen gelöst, mit definierter Menge methanolischer 0,1 m KOH versetzt) mit 0,1 m methanolischer HCI; Angaben in Masse-%, bezogen auf Gesamtpfropfprodukt;

- Pfropfausbeute (PA) nach Abtrennung des Homo- und Copolymeranteils durch fraktionierte Fällung entsprechend der Beziehung:

$$PA = \frac{\text{Masse gepfropftes Carboxylmonomer}}{\text{Gesamtmasse an polymerisiertem Carboxylmonomer}} \; 100\;\%$$

und Pfropfungsgrad (PG) mittels Beziehung:

$$PG = \frac{\text{Masse gepfropftes Carboxylmonomer}}{\text{eingesetzte Masse Rückgrat-Blockcopolymer}} \; 100\;\%$$

- Gelgehalt $m_{Gel}$ (Masse-%), d. h., der auf das gesamte Pfropfprodukt bezogene, als Lösungsrückstand ermittelte Gelmassenanteil (2 g Pfropfprodukt in 100 ml Xylen gelöst und 12 h unter Rückfluß behandelt).

Zur Gegenüberstellung wurden analoge Pfropfprodukte auf Basis der Schmelzepfropfung (30 mm-Durchmesser-Doppelschneckenextruder, Temperaturprogramm von Zuführung = 150°C bis zur Düse auf 260°C ansteigend/ massenmittlere Temperatur = 240°C; Schneckengeschwindigkeit: 200 Upm, Durchsatz: 10 kg/h) hergestellt. Während die Verwendung von Acrylsäure als Carboxylmonomer und Styren oder einer anderen als Comonomer eingesetzten Verbindung (MMA; 1,9-Decadien) keine einsatzfähigen Pfropfprodukte ergab, wurden mit MSA als Pfropfmonomer und tert.-Butylperoxid (tBP) als Initiator Produkte mit deutlich niedrigeren Pfropfausbeuten und Pfropfungsgraden erhalten (s. Beispiele unter lfd. Nr., Vgl. 1 bis Vgl. 6 und Vgl. 6A).

Tabelle 1 -

| Verwendete Rückgrat-Blockcopolymere | | | | | | |
|---|---|---|---|---|---|---|
| Lfd. Nr. | Blockcopolymer-Typ | Massen-Verh. PS/B bzw. PS/ EP o.EB | $M_W$ x $10^{-3}$ | Shorehärte | MFI (190/5) (g/10') | $M_W$, Dichte (g/cm³) |
| 1 | selektiv hydr. SBS-Sternblockcop. (< 3 % Restdoppelbindg. im EB-Block) <u>SEBS</u> Pulver | 29/71 | 80 | A 75 | - | 0,91 |
| 2 | selektiv hydr. SI-Zweiblockcop. (< 5 % Restdoppelbindg. im EP-Block) <u>SEP</u> Pulver | 37/63 | 140 | A 72 | - | 0,92 |

Tabelle 1 -   (continued)

| Verwendete Rückgrat-Blockcopolymere | | | | | | |
|---|---|---|---|---|---|---|
| Lfd. Nr. | Blockcopolymer-Typ | Massen-Verh. PS/B bzw. PS/ EP o.EB | $M_W$ x $10^{-3}$ | Shorehärte | MFI (190/5) (g/ 10') | $M_W$, Dichte (g/ $cm^3$) |
| 3 | lineares SBS-Dreiblockcop. Granulat (d= 2,1 mm) | 29/71 | 100 | A 70 | 4,2 | 0,94 |
| 4 | SBS-Sternblockcop. Krümel | 20/80 | 180 | A 57 | 0,1 | 0,93 |
| 5 | SBS-Sternblockcop. Krümel | 40/60 | 150 | A 92 | 0,2 | 0,96 |
| 6 | unsymmetr. lineares SBS-Dreiblockcop. $S_1BS_2$ Krümel | 73/27 | 165 | D 69 | 7,5 | 1,01 |

**Tabelle 2 - Pfropfpolymerisationsbedingungen**

| lfd. Nr. | Polymerisationsrezeptur (Angaben in Massenteile, auf 100 Ma.-Teile Blockcop.-Rückgrat) | | | | Polymerisationsregime | | |
|---|---|---|---|---|---|---|---|
| | Rückgrat Tab.1 | AS | MSA | Comon. | Initiator | $T_{pm}$ (°C) | $t_{pm}$ (h) |
| Vgl.1 | SEBS | | 2,5 | | 0,1 t BP | 240 | 0,2 |
| 1.0 | (29 % | | 2,5 | | 1,0 DLPO | 75 | 2/3 |
| 1.1 | PS) | | 2,5 | 2,5 St | 1,0 " | 75 | 2/3 |
| 1.2 | " | | 5,0 | 5,0 St | 1,0 " | 75 | 2/3 |
| 1.3 | " | 2,5 | | | 1,0 " | 75 | 2/2 |
| 1.4 | " | 2,5 | | | 3,0 DIPP | 55 | 1/2 |
| 1.5 | " | 5,0 | | | 3,0 " | 60 | 1/3 |
| Vgl.2 | SEP | 2,5 | | | 0,1 t BP | 230 | 0,25 |
| 2.0 | (37 % | 2,5 | | | 3,0 DIPP | 60 | 1/3 |
| 2.1 | PS) | 2,5 | | 2,5 MMA | 1,5 DLPO | 75 | 2/2 |
| Vgl.3 | lin. | | 2,5 | | 0,1 t BP | 240 | 0,2 |
| 3.0 | SBS | | 2,5 | | 1,0 DLPO | 75 | 2/3 |
| 3.1 | (29 % | | 2,5 | 5,0 St | 1,0 " | 75 | 2/3 |
| 3.2 | PS) | | 5,0 | 2,5 St | 1,0 " | 75 | 2/3 |
| 3.3 | " | 2,5 | | | 3,0 DIPP | 60 | 2/2 |
| 3.4 | " | 2,5 | | 5,0 St | 2,0 CPND | 55 | 1/3 |
| 3.5 | " | 2,5 | | 2,5 Dec | 2,5 DIPP | 60 | 2/2 |
| Vgl.4 | rad. | | 2,5 | | 0,12 t BP | 240 | 0,2 |
| 4.0 | SBS | | 2,5 | | 1,0 DLPO | 75 | 2/2 |
| 4.1 | (20 % | | 2,5 | 5,0 St | 1,0 " | 75 | 2/2 |
| 4.2 | PS) | | 5,0 | 10,0 St | 1,0 " | 75 | 2/2 |
| 4.3 | " | 2,5 | | | 1,0 " | 75 | 2/2 |
| 4.4 | " | 2,5 | | 2,5 St | 1,0 " | 75 | 2/2 |
| 4.5 | " | 2,5 | | 7,5 St | 1,0 " | 75 | 2/2 |
| 4.6 | " | 5,0 | | 5,0 St | 0,25 " | 75 | 2/2,5 |
| 4.7 | " | 5,0 | | 5,0 St | 0,75 " | 75 | 2/2,5 |
| 4.8 | " | 10,0 | | 10,0 St | 1,0 " | 75 | 2/3 |

**Fortsetzung Tabelle 2 - Pfropfpolymerisationsbedingungen**

| lfd. Nr. | Polymerisationsrezeptur (Angaben in Massenteile, auf 100 Ma.-Teile Blockcop.-Rückgrat) | | | | | Polymerisationsregime | |
|---|---|---|---|---|---|---|---|
| | Rückgrat Tab.1 | AS | MSA | Comon. | Initiator | $T_{pm}$ (°C) | $t_{pm}$ (h) |
| Vgl.5 | rad. | | 2,5 | | 0,1 t BP | 240 | 0,25 |
| 5.0 | SBS | | 2,5 | | 1,0 DLPO | 75 | 2/2 |
| 5.1 | (40 % | | 2,5 | 5,0 St | 1,0 " | 75 | 2/2 |
| 5.2 | PS) | | 2,5 | | 0,5 " | 75 | 2/2 |
| 5.3 | " | | 5,0 | 5,0 St | 1,0 " | 75 | 2/2 |
| 5.4 | " | 2,5 | | | 1,0 " | 75 | 2/2 |
| 5.5 | " | 5,0 | | 5,0 St | 1,0 " | 75 | 2/2 |
| Vgl.6 A | unsym. | | 1,25 | | 0,07 t BP | 240 | 0,15 |
| Vgl.6 | lin. | | 2,5 | | 0,1 t BP | 240 | 0,25 |
| 6.0 | $S_1BS_2$ | | 2,5 | | 1,0 DLPO | 75 | 2/2 |
| 6.1 | (73 % | | 2,5 | | 0,5 " | 75 | 2/2 |
| 6.2 | PS) | | 2,5 | 1,25 St | 0,75 " | 75 | 2/2 |
| 6.3 | " | | 2,5 | 2,5 St | 0,5 " | 75 | 2/2 |
| 6.4 | " | | 5,0 | | 1,0 " | 75 | 2/2 |
| 6.5 | " | | 5,0 | 2,5 St | 1,0 " | 75 | 2/2 |
| 6.6 | " | 1,25 | | | 1,0 " | 75 | 2/2 |
| 6.7 | " | 2,5 | | | 1,0 " | 75 | 2/2 |
| 6.8 | " | 2,5 | | | 0,75 " | 75 | 2/2 |
| 6.9 | " | 2,5 | | | 0,5 " | 75 | 2/2 |
| 6.10 | " | 2,5 | | | 0,25 " | 75 | 2/2 |
| 6.11 | " | 5,0 | | | 1,0 " | 75 | 2/2 |
| 6.12 | " | 7,5 | | | 1,0 " | 75 | 2/2 |
| 6.13 | " | 10,0 | | | 1,5 " | 75 | 2/3 |
| 6.14 | " | 1,25 | | 0,625 St | 1,0 " | 75 | 2/2 |
| 6.15 | " | 2,5 | | 1,25 St | 0,5 " | 75 | 2/2 |
| 6.16 | " | 2,5 | | 2,5 St | 0,5 " | 75 | 2/2 |
| 6.17 | " | 2,5 | | 5,0 St | 0,5 " | 75 | 2/2 |

Tabelle 3 - Charakterisierung der pfropfcarboxylierten Blockcopolymerisate

lfd. Kennwerte der funktionalisierten Blockcopolymere

| Nr. | MFI (g/10 min) | $m_{carb.}$ (Ma-%) | PA (%) | PG (%) | $m_{Gel}$ (Ma-%) |
|---|---|---|---|---|---|
| Vgl.1 | n.m. | 1,50 | 36 | 0,54 | 1,3 |
| 1.0 | n.m. | 1,71 | 82 | 1,40 | 23,5 |
| 1.1 | 0,5 | 1,73 | 84 | 1,45 | 0,4 |
| 1.2 | 0,4 | 2,20 | 88 | 1,94 | 5,7 |
| 1.3 | n.m. | 1,61 | 84 | 1,35 | 6,7 |
| 1.4 | n.m. | 1,95 | 81 | 1,58 | 10,5 |
| 1.5 | 0,1 | 3,67 | 82 | 3,01 | 42,5 |
| Vgl.2 | n.m. | 0,3 | n.m. | 0,0 | - |
| 2.0 | n.m. | 1,62 | 87 | 3,19 | 52,4 |
| 2.1 | 8,5 | 1,38 | 89 | 1,23 | 2,1 |
| Vgl.3 | 6,3 | 0,63 | 48 | 0,30 | 4,2 |
| 3.0 | 4,5 | 2,23 | 83 | 1,85 | 16,1 |
| 3.1 | 1,0 | 2,27 | 82 | 1,86 | 2,2 |
| 3.2 | 0,5 | 3,16 | 86 | 2,72 | 20,0 |
| 3.3 | n.m. | 1,67 | 90 | 1,50 | 94,6 |
| 3.4 | 5,9 | 1,76 | 91 | 1,60 | 8,0 |
| 3.5 | n.m. | 1,35 | 94 | 1,27 | 83,6 |
| Vgl.4 | n.m. | 1,35 | 42 | 0,57 | 17,3 |
| 4.0 | n.m. | 1,64 | 83 | 1,36 | 65,2 |
| 4.1 | n.m. | 1,88 | 91 | 1,71 | 6,9 |
| 4.2 | n.m. | 2,65 | 86 | 2,28 | 14,5 |
| 4.3 | n.m. | 2,30 | 83 | 1,91 | 83,9 |
| 4.4 | 0,1 | 2,31 | 81 | 1,87 | 66,3 |
| 4.5 | 2,1 | 1,58 | 87 | 1,37 | 9,9 |
| 4.6 | 1,3 | 2,24 | 91 | 2,04 | 1,1 |
| 4.7 | 1,0 | 3,79 | 86 | 3,26 | 1,6 |
| 4.8 | n.m. | 6,32 | 68 | 4,30 | 58,5 |

10

Fortsetzung Tabelle 3 - Charakterisierung der pfropfcarboxylierten Blockcopolymerisate

| lfd. Nr. | Kennwerte der funktionalisierten Blockcopolymere | | | | |
|---|---|---|---|---|---|
| | MFI (g/10 min) | $m_{carb.}$ (Ma-%) | PA (%) | PG (%) | $m_{Gel}$ (Ma-%) |
| Vgl.5 | 2,5 | 1,40 | 36 | 0,52 | 5,2 |
| 5.0 | n.m. | 1,86 | 83 | 1,54 | 64,7 |
| 5.1 | 0,1 | 1,84 | 85 | 1,56 | 4,8 |
| 5.2 | 0,3 | 2,19 | 85 | 1,86 | 9,6 |
| 5.3 | n.m. | 3,04 | 81 | 2,46 | 12,6 |
| 5.4 | 0,4 | 1,49 | 96 | 1,43 | 21,0 |
| 5.5 | 6,2 | 1,86 | 92 | 1,71 | 0 |
| Vgl.6A | 1,8 | 0,73 | 48 | 0,35 | 15,3 |
| Vgl.6 | 0,2 | 1,31 | 39 | 0,51 | 23,2 |
| 6.0 | 1,1 | 1,65 | 82 | 1,35 | 71,3 |
| 6.1 | 15,5 | 1,76 | 91 | 1,60 | 4,1 |
| 6.2 | 2,4 | 1,99 | 92 | 1,83 | 2,7 |
| 6.3 | 3,0 | 1,66 | 84 | 1,39 | 1,3 |
| 6.4 | 0,7 | 3,08 | 85 | 2,62 | 70,1 |
| 6.5 | 0,1 | 2,82 | 87 | 2,45 | 44,3 |
| 6.6 | 2,9 | 1,16 | 80 | 0,93 | 56,3 |
| 6.7 | 2,6 | 2,50 | 82 | 2,05 | 44,8 |
| 6.8 | 3,5 | 2,48 | 84 | 2,08 | 15,9 |
| 6.9 | 13,7 | 1,80 | 88 | 1,58 | 6,6 |
| 6.10 | 30,2 | 1,70 | 91 | 1,55 | 0,3 |
| 6.11 | 1,4 | 3,90 | 82 | 3,21 | 60,2 |
| 6.12 | 5,5 | 5,14 | 81 | 4,16 | 31,5 |
| 6.13 | 4,1 | 8,01 | 82 | 6,57 | 88,3 |
| 6.14 | 3,1 | 1,15 | 86 | 0,99 | 45,7 |
| 6.15 | 23,1 | 1,96 | 88 | 1,72 | 3 |
| 6.16 | 30,4 | 1,78 | 93 | 1,66 | 1,5 |
| 6.17 | 14,4 | 2,32 | 90 | 2,09 | 0,5 |

**Patentansprüche**

1. Verfahren zur Herstellung von carboxylierten Styren-Dien-Blockcopolymeren durch radikalische Pfropfung einer , β-ethylenisch ungesättigten Mono- und/oder Dicarbonsäure bzw. ihres Anhydrids (Carboxylmonomer) auf unhydrierte und/oder selektiv hydrierte Styren-Dien-Blockcopolymere auf Basis von Zusammensetzungen 10 bis 90 Masse-% Styren - /90 bis 10 Masse-% (gegebenenfalls selektiv hydrierte) Dieneinheiten mit massenmittleren Molekulargewichten zwischen 20000 und 300000, vorzugsweise zwischen 50000 und 250000, unter Sicherung von Pfropfausbeuten zwischen 50 und 99 %, vorzugsweise zwischen 80 und 95 %, über einen Gelgehaltsbereich für das carboxylierte Blockcopolymerisat von 0 bis 95 Masse-%, gekennzeichnet dadurch, daß bei Polymerisationstemperaturen zwischen 40 und 100°C Zusammensetzungen aus 0,2 bis 10 Massenteilen Carboxylmonomer und 0 bis 10 Massenteilen carboxylgruppen- und säureanhydridgruppenfreies Comonomer oder Comonomergemisch, bezogen auf100 Massenteile Blockcopolymer-Rückgrat, in trockener pulveriger und/oder krümeliger und/oder schuppen- und/oder blättchen- und/oder granulatförmiger Reaktionsphase bis zur Erreichung einer auf die Blockcopolymer-Rückgratmasse bezogenen Konzentration zwischen 0,1 und 10 % polymerisiertes Carboxylmonomer gepfropft werden.

2. Verfahren nach Anspruch 1, gekennzeichnet dadurch, daß bei Polymerisationstemperaturen zwischen 50 und 90°C gepfropft wird.

3. Verfahren nach den Ansprüchen 1 und 2, gekennzeichnet dadurch, daß bis zur Erreichung einer auf die Blockcopolymer-Rückgratmasse bezogenen Konzentration zwischen 0,5 und 5,0 % polymerisiertes Carboxylmonomer gepfropft wird.

4. Verfahren nach den Ansprüchen 1 bis 3, gekennzeichnet dadurch, daß als Carboxylmonomer 0,2 bis 10 Massenteile Acrylsäure, bezogen auf 100 Massenteile eingesetztes Blockcopolymer-Rückgrat, verwendet werden.

5. Verfahren nach den Ansprüchen 1 bis 3, gekennzeichnet dadurch, daß als Carboxylmonomer 0,2 bis 5 Massenteile Maleinsäureanhydrid, bezogen auf 100 Massenteile eingesetztes Blockcopolymer-Rückgrat, verwendet werden.

6. Verfahren nach den Ansprüchen 1 bis 5, gekennzeichnet dadurch, daß Pfropfmonomerzusammensetzungen mit Massenverhältnissen von 1 Teil Carboxylmonomer zu 0,2 bis 5 Teile carboxylgruppen- und anhydridgruppenfreies Comonomer oder Comonomergemisch eingesetzt werden.

7. Verfahren nach Anspruch 6, gekennzeichnet dadurch, daß als Comonomer Styren eingesetzt wird.

8. Verfahren nach Anspruch 6, gekennzeichnet dadurch, daß als Comonomer $C_4$- bis $C_{16}$-Olefine und/oder -Diene verwendet werden.

9. Verfahren nach Anspruch 6, gekennzeichnet dadurch, daß als Comonomer $C_1$- bis $C_8$-Ester der Acrylsäure und/ oder Methacrylsäure eingesetzt werden.

## Claims

1. Process for the manufacture of carboxylated styrene/diene block copolymers by the radical grafting of a β-ethylene unsaturated mono- and/or dicarbonic acid or its anhydride (carboxyl monomer) onto unhydrogenated and/or selectively hydrogenated styrene/diene block copolymers on the basis of compositions of 10 to 90% by weight styrene - /90 to 10% by weight (if necessary selectively hydrogenated) diene units with weight-average molecular weights between 20,000 and 300,000, preferably between 50,000 and 250,000, securing graft yields of between 50 and 99%, preferably between 80 and 95%, over a gel-content range for the carboxylated block copolymer of 0 to 95% by weight, characterized by the fact that, at polymerization temperatures between 40 and 100°C, compositions of 0.2 to 10 parts by weight carboxyl monomer and 0 to 10 parts by weight carboxyl group- and anhydride group-free comonomer or comonomer mixture per 100 parts by weight block copolymer-backbone, in dry powdery and/or crumb-like and/or scale-like and/or leaf-like and/or granular reaction phase are grafted until a concentration of between 0.1 and 10% polymerized carboxyl monomer in relation to the block copolymer-backbone mass is obtained.

2. Process as in claim 1, characterized by the fact that grafting takes place at polymerization temperatures between 50 and 90°C.

3. Process as in claims 1 and 2, characterized by the fact that grafting continues until a concentration of between 0.5 and 5.0% polymerized carboxyl monomer in relation to the block copolymer-backbone mass has been obtained.

4. Process as in claims 1 to 3, characterized by the fact that 0.2 to 10 parts by weight acrylic acid per 100 parts by weight of the block copolymer-backbone are used as carboxyl monomer.

5. Process as in claims 1 to 3, characterized by the fact that 0.2 to 5 parts by weight maleic anhydride per 100 parts by weight of the block copolymer-backbone are used as carboxyl monomer.

6. Process as in claims 1 to 5, characterized by the fact that graft monomer compositions with mass ratios of 1 part carboxyl monomer to 0.2 to 5 parts carboxyl group- and anhydride group-free comonomer or comonomer mixture are used.

7. Process as in claim 6, characterized by the fact that styrene is used as comonomer.

8. Process as in claim 6, characterized by the fact that $C_4$ to $C_{16}$ olefins and/or dienes are used as comonomer.

9. Process as in claim 6, characterized by the fact that $C_1$ to $C_8$ ester of acrylic acid and/or methacrylic acid are used as comonomer.


**Revendications**

1. Procédé de production de copolymères séquencés carboxylés au styrène diène par greffage radicalaire d'un acide monocarbonique ou dicarbonique éthylénique β non saturé ou de son anhydride (monomère carboxyle) sur des copolymères séquencés au styrène diène non hydrogénés et/ou sélectivement hydrogénés à la base de formulations de 10 à 90 % en poids d'unités de styrène / 90 à 10 % en poids d'unités de diène (également sélectivement hydrogéné) avec des masses moléculaires moyennes en poids allant de 20 000 à 300 000 de préférence entre 50 000 et 250 000, sous garantie de rendements de greffage entre 50 et 99 %, de préférence entre 80 et 95 %, dans une gamme de teneur en gel pour le copolymère séquencé carboxylé de 0 à 95 % en poids caractérisé par le fait que peuvent être greffées par des températurres de polymérisation entre 40 et 100 °C des formulations de 0,2 à 10 parts en poids de monomère carboxyle et de 0 à 10 parts en poids de comonomère ou de mélange de comonomère exempt de groupes caboxyle et de groupes d'anhydride acide, rapportées à 100 parts en poids de polymère séquencé de support en phase de réaction sèche pulvérulente et /ou grumeleuse et / ou sous forme d'écailles, et/ ou de lamelles et/ ou de granulés jusqu'à l'obtention d'une concentration située entre 0,1 et 10 % de monomère carboxyle polymérisé rapportée à la masse de support de copolymère séquencé.

2. Procédé selon la spécification 1, caractérisé par le fait que le greffage se produit par des températures de polymérisation entre 50 et 90 °C.

3. Procédé selon les spécifications 1 et 2, caractérisé par le fait que du monomère carboxyle polymérisé est greffé jusqu'à l'obtention d'une concentration située entre 0,5 et 5 % rapportée à la masse de support de copolymère séquencé.

4. Procédé selon les spécifications de 1 à 3, caractérisé par le fait que sont utilisées comme monomère calboxyle de 0,2 à 10 % de parts en poids d'acide acrylique rapportées à 100 parts en poids du support de copolymère séquencé utilisé.

5. Procédé selon les spécifications de 1 à 3, caractérisé par le fait que sont utilisées comme monomère calboxyle de 0,2 à 5 % de parts en poids d'anhydride de l'acide maléique rapportées à 100 parts en poids du support de copolymère séquencé utilisé.

6. Procédé selon les spécifications de 1 à 5, caractérisé par le fait que sont utilisées des formulations de monomère greffé avec des rapports de poids d'une part de monomère carboxyle rapportée à 0,2 jusqu'à 5 parts de comonomère ou de mélange de comonomère exemptes de goupes carboxyle et de groupes d'anhydride.

7. Procédé selon la spécification 6, caractérisé par le fait que le comonomère utilisé est du styrène.

8. Procédé selon la spécification 6, caractérisé par le fait que le comonomère utilisé est de l'oléfine de $C_4$ jusqu'à $C_{16}$ et /ou du diène.

9. Procédé selon la spécification 6, caractérisé par le fait que le comonomère utilisé est de l'ester de l'acide acrylique

de $C_1$ jusqu'à $C_8$ et /ou de l'acide méthacrylique.